# EUROPÄISCHE PATENTSCHRIFT

(11) **EP 1 243 351 B1**
(45) Veröffentlichungstag und Bekanntmachung des Hinweises auf die Patenterteilung: **08.08.2007**
(21) Anmeldenummer: 02004383.2
(22) Anmeldetag: 05.03.2002
(51) Int. Cl.: B08B 9/08, B01F 7/00, B01D 36/04

(54) **Reinigungssystem und Verfahren zur Reinigung von Heizöl**
Cleaning system and method for cleaning fuel oil
Système de nettoyage et procédé pour nettoyer de l'huile combustible

(30) Priorität: 22.03.2001 DE 10114753
(43) Veröffentlichungstag der Anmeldung: 25.09.2002
(73) Patentinhaber: Thomas Falkenstein Gewerbliche Vermietung und Verpachtung e.K., 73614 Schorndorf-Schlichten (DE)
(72) Erfinder: Falkenstein, Thomas, 73547 Lorch (DE)
(74) Vertreter: Steil, Christian

(56) Entgegenhaltungen:
- EP-A- 1 024 351
- WO-A-93/18864
- DE-A- 2 434 513
- DE-A- 2 455 455
- DE-U- 20 010 692
- GB-A- 940 117
- GB-A- 2 004 762
- US-A- 4 519 714
- US-A- 6 041 793

## Beschreibung

Die Erfindung betrifft ein Reinigungssystem zur Reinigung von Heizöl, das in einem Tank, insbesondere einem Tank eines Heizölendverbrauchers, gelagert ist mit einer Verwirbelungseinrichtung zur Aufmischung des Heizöls, wobei die Verwirbelungseinrichtung als Rührgerät mit einem motorisch angetriebenen Propeller ausgebildet ist, und mit einer Umlauffiltereinrichtung, die eine in den Tank einführbare Ansaugleitung, eine Umwälzpumpe, eine Abtrennanlage zum Abtrennen von Heizöl, Verunreinigungen und eine in den Tank einführbare Rückflußleitung aufweist, die Verwirbelungseinrichtung, die Ansaugleitung und die Rüchflußleitung in den Tank einföhrbar und nach einer Reinigung herausnehmbar sind.

Das erfindungsgemäße Verfahren weist die folgenden Schritte auf: Aufmischen des Heizöls mit einer in den Tank eingeführten Verwirbelungseinrichtung, die als Rührgerät mit einem motorisch angetriebenen Propeller ausgebildet ist; und Ansaugen von Heizöl, Reinigen des angesaugten Heizöls und Zurückführen des gereinigten Heizöls in den Tank mit Hilfe einer Umlauffiltereinrichtung.

Das Dokument US-A-6041793 offenbart ein solches Reinigungssystem gemäß dem Oberbegriff des Anspruchs 1 und ein solches Verfahren gemäß dem Oberbegriff des Anspruchs 10.

Die internationale Anmeldung WO 93/18864 mit dem Titel "Verfahren und Vorrichtung zum Reinigen eines Öltanks" offenbart ein Verfahren und eine Vorrichtung zum Reinigen eines Öltanks, der Ölreste enthält, wobei die Ölreste mittels eines Verflüssigungsagenten verflüssigt und in einem flüssigen Zustand aus dem Tank abgelassen und in Teile getrennt werden. Der Verflüssigungsagent, der primär verwendet wird, ist ein Teil des aus dem Tank abgelassenen Ölrestes, wobei eine Reinigung und ein Erwärmen durchgeführt wird.

Das deutsche Gebrauchsmuster DE 200 10 692 U1 offenbart eine mobile Reinigungsvorrichtung für Dieseltanks auf insbesondere Segel-Motoryachten, wobei die Reinigungsvorrichtung auf einem fahrbaren Gestell eine Motorpumpe, an die ein Saugschlauch und ein Rückführschlauch für die mit erhöhtem Förderdruck erfolgende Zirkulation des in dem Dieseltank enthaltenen Dieselkraftstoffs angeschlossen sind, eine Filtereinrichtung für den zirkulierenden Dieselkraftstoff und einen Sammelbehälter für den aus dem zirkulierenden Dieselkraftstoff ausgeschiedenen Tankschmutz aufweist, wobei einem der Schläuche der Motorpumpe ein in den Dieseltank einführbares, flexibles optisches Endoskop zur Inspektion des Tankinneren zugeordnet ist.

Die Erfindung betrifft ein Reinigungssystem gemäß Anspruch 1 sowie ein Verfahren zur Reinigung von Heizöl gemäß Anspruch 10.
Heizöl für Ölheizungen von Ein- und Mehrfamilienhäusern oder kleineren Gewerbebetrieben wird in der Regel vor Ort in Tanks gelagert, die ein Fassungsvermögen von einigen tausend Litern bis zu größenordnungsmäßig etwa hunderttausend Litern aufweisen. Ältere Tanks dieser Größenordnung sind meist als einfache Stahlbehälter ausgeführt, die an ihrer Oberseite mit einem durch eine Klappe verschließbaren Dom versehen sind. Modernere Tanks dieser Art hingegen sind häufig doppelwandig ausgeführt und bestehen aus glasfaserverstärktem Kunststoff. Im Gegensatz zu Stahlbehältern können derartige Tanks praktisch nicht korrodieren; außerdem verhindert die doppelwandige Ausführung, daß bei Auftreten eines Lecks an der Innenwand Heizöl nach außen in einen umgebenden Raum oder das Erdreich gelangt.

Bei der Lagerung von Heizöl in Tanks setzt sich nach einiger Zeit am Boden des Tanks ein Heizölschlamm ab, der im wesentlichen aus Parafinen und fossilen Schwebstoffen mit einem höheren spezifischen Gewicht als das übrige Heizöl besteht. Nach zehn bis fünfzehn Jahren ist die Menge des Heizölschlamms derart angewachsen, daß eine Reinigung des Tanks erforderlich ist, um das Eindringen des Heizölschlamms in einen Brenner der Ölheizung zu verhindern. Die Reinigung des Tanks wird häufig auch zum Anlaß genommen, den Tank selbst auf Leckstellen, Risse oder Korrosionsschäden zu überprüfen. Auf diese Weise läßt sich das Risiko, daß Heizöl unbemerkt aus dem Tank austritt, erheblich reduzieren. Von außen ist eine derartige Überprüfung in der Regel nicht möglich. Bei Stahltanks ist der besonders korrosionsanfällige Boden in der Regel nicht oder nur unter erschwerten Bedingungen zugänglich.

Bislang wird bei der Reinigung des Heizöls zunächst die Klappe des Doms geöffnet und das saubere Heizöl oberhalb des abgesetzten Heizölschlamms abgesaugt und in einem Zwischenbehälter zwischengelagert. Der verbleibende Heizölschlamm wird in einen separaten Behälter abgesaugt und später entsorgt. Bevor das im Zwischenbehälter gelagerte Heizöl wieder zurück in den Tank geleitet wird, kann noch eine Überprüfung des Tanks auf Korrosionsschäden erfolgen. Hierzu steigt ein Reinigungsfachmann durch den Dom des Tanks in das Innere ein, reinigt die Tankwandung und überprüft diese dabei auf Risse und andere Korrosionsschäden.

Das vorstehend beschriebene bekannte Verfahren ist insofern relativ aufwendig, weil der Zwischenbehälter praktisch das gleiche Fassungsvermögen wie der Tank aufweisen muß, dessen Heizöl gereinigt werden soll. Außerdem enthält der zu entsorgende Heizölschlamm häufig noch eine relativ große Menge verwertbaren Heizöls, die bei dem bekannten Verfahren mit entsorgt wird.

Aufgabe der Erfindung ist es daher, ein Reinigungssystem und ein Verfahren zur Reinigung von Heizöl anzugeben, welches einfacher in der Handhabung, effektiver und dadurch kostengünstiger ist. Diese Aufgabe wird durch das Reinigungssystem gemäß Anspruch 1, bzw. durch das Verfahren zur Reinigung von Heizöl gemäß Anspruch 10, gelöst.

Hinsichtlich des Reinigungssystems wird diese Aufgabe dadurch gelöst, daß der Propeller in allen drei Raumrichtungen bewegbar an dem Rührgerät angeordnet ist.

Hinsichtlich des Verfahrens wird die vorstehend genannte Aufgabe durch folgende Schritte gelöst: Bewegen des Propellers in dem Tank während der Reinigung in allen drei Raumrichtungen.

In Abkehr von dem bisher verfolgten Ansatz, wonach die sich mit der Zeit einstellende Sedimentation des Heizölschlamms zu dessen Abtrennung ausgenutzt wird, erfolgt nach der Erfindung statt dessen eine möglichst gründliche Aufmischung des gesamten Tankinhalts mit Hilfe einer in den Tank eingeführten Verwirbelungseinrichtung. Der Heizölschlamm und das saubere Heizöl werden auf diese Weise zu einer weitgehend homogenen Emulsion vermischt, bevor sie anschließend in einer Umlauffiltereinrichtung gereinigt werden. Eine solche Umlauffiltereinrichtung hat den entscheidenden Vorteil, daß ein zeitweiliges Abpumpen in einen Zwischenbehälter nicht erforderlich ist. Das neue Reinigungssystem benötigt aus diesem Grund erheblich weniger Platz als herkömmliche Anlagen mit Zwischenbehälter.

Vorteilhaft ist ferner, daß in der Abtrennanlage der Umlauffiltereinrichtung eine wesentlich vollständigere Abtrennung und Reinigung des Heizöls als bei der bekannten Sedimentations-Technik möglich ist. Die Menge der zu entsorgenden Rückstände kann daher bei dem neuen Reinigungssystem und -verfahren erheblich reduziert werden.

Als Verwirbelungseinrichtung für das neue Reinigungssystem kommen prinzipiell alle mechanischen Rührgeräte in Frage, die sich in das Innere des Tanks einführen lassen und imstande sind, auch relativ viskose Flüssigkeiten aufzumischen.

Besonders bevorzugt ist es, wenn die Verwirbelungseinrichtung als Rührgerät mit einem motorisch angetriebenen Propeller ausgebildet ist.

Die Verwendung eines derartigen Rührgerätes als Verwirbelungseinrichtung hat den Vorteil, daß sich auf diese Weise eine sehr starke Verwirbelung erzielen läßt, die grundsätzlich nur von der Größe des Propellers und der zur Verfügung stehenden Antriebsleistung abhängt.

Dabei ist es weiter bevorzugt, wenn der Propeller hydromotorisch angetrieben ist.

Ein hydromotorischer Antrieb hat gegenüber elektromotorischen oder verbrennungsmotorischen Antrieben den Vorteil, daß sich weder Funken bilden können noch lokale Wärmequellen vorhanden sind, die zu einem Entzünden des Heizöls oder im Tank befindlicher Gase führen können. Ein für den hydromotorischen Antrieb erforderliches Hydraulikaggregat kann dabei weit entfernt von dem Tank angeordnet sein, so daß eine Gefährdung ausgeschlossen ist.

Weiter ist es bevorzugt, wenn der Propeller in allen drei Raumrichtungen bewegbar an dem Rührgerät angeordnet ist.

Eine derartige Anordnung ermöglicht es nämlich, den Inhalt auch größerer Tanks vollständig aufzumischen, indem der Propeller im Tank selbst bewegt wird. Zwar wird es in der Regel nicht möglich sein, den gesamten Tankinhalt mit dem Propeller zu durchfahren; es hat sich allerdings gezeigt, daß selbst relativ kleine Bewegungen oder Verschwenkungen des Propellers in dem Tank genügen, um den Tankinhalt vollständig aufzumischen.

Dabei ist es weiter bevorzugt, wenn der Propeller um eine Propellerquerachse verschwenkbar ist.

Durch diese technisch einfach realisierbare Maßnahme läßt sich eine effektive Verwirbelung in einem sehr großen Raumbereich um den Propeller herum erzielen.

Bei einer anderen bevorzugten Ausgestaltung der Erfindung weist die Umlauffiltereinrichtung einen Dekanter auf.

Auf diese Weise wird die Abtrennung der zur Ausbildung des Heizölschlamms führenden Schwebstoffe von dem in der Umlauffiltereinrichtung umgewälzten Heizöl zusätzlich verbessert. Dekanter sind Zentrifugen, mit denen sich insbesondere einen Feststoffkuchen bildende Bestandteile aus relativ zähflüssigen Suspensionen abtrennen lassen. Für die Umlauffiltereinrichtung besonders geeignet sind 3-Phasen-Dekanter, die eine Auftrennung in 3 Phasen (Öl, Wasser, Schwebstoffe) ermöglichen.

Die Umwälzpumpe, die Abtrennanlage und gegebenenfalls der Dekanter können in einem Gerät zusammengefaßt sein, welches in unmittelbarer Nähe des Heizöltanks aufgestellt wird, so daß nur relativ kurze Rohr- oder Schlauchleitungen erforderlich sind.

Bevorzugt ist es hingegen, wenn die Umwälzpumpe, die Abtrennanlage und gegebenenfalls der Dekanter in einer fahrbaren Einheit wie einem Kraftfahrzeug oder einem Anhänger angeordnet sind.

Auf diese Weise entfällt der Aufwand, größere Geräte oder Zwischenbehälter in die Nähe des Tanks, z.B. in Kellerräume, zu transportieren. Statt dessen werden die Ansaugleitung und die Rückflußleitung als entsprechend lange Schläuche ausgeführt, die z.B. von an dem Kraftfahrzeug angebrachten Rollen abgerollt, zum Tank geführt und schließlich in diesen eingeführt werden. Auf diese Weise entsteht ein mobiles Reinigungssystem, welches eine besonders einfache Handhabung durch Bedienpersonal ermöglicht und in kürzester Zeit vor Ort aufgebaut ist. Lediglich die Verwirbelungseinrichtung ist von der Bedienperson vom Kraftfahrzeug bis zu dem Tank zu tragen und dort durch die Tanköffnung einzuführen.

Da bei dem erfindungsgemäßen Reinigungssystem und -verfahren der Tank nicht entleert wird, sondern das Heizöl im Umlaufbetrieb gereinigt wird, ist eine Begehung des Tanks zur Überprüfung von Korrosions- oder anderen Schäden nicht ohne weiteres möglich.

Bei einer bevorzugten Ausgestaltung der Erfindung umfaßt daher das Reinigungssystem eine in den Tank einführbare Meßeinrichtung zur Messung der Wandstärke des Tanks.

Auf diese Weise können Leck- oder Flachstellen der Tankwandung frühzeitig erkannt werden. Geeignet hierfür sind z.B. Radarsensoren, die auch feinste Unebenheiten an Oberflächen aufspüren können. Die Meßeinrichtung kann außerdem einen zusätzlichen Ultraschallsensor aufweisen, mit dem sich auch feine Risse in der Tankwandung nachweisen lassen. Eine solche Meßeinrichtung ist insbesondere bei älteren, als Stahlbehälter ausgeführten Tanks sinnvoll. Bei Kunststofftanks hingegen kann auf eine Überprüfung des Tanks häufig verzichtet werden, da viele derartige Tanks aufgrund zusätzlicher Maßnahmen, z.B. doppelwandige Ausführung oder ein eigenes sensorgestütztes Überwachungssystem, eine Überprüfung von der Tankinnenseite her nicht mehr erfordern.

Bei einer bevorzugten Weiterbildung dieser Ausgestaltung ist die Meßeinrichtung als ein fernsteuerbares Tauchboot ausgebildet.

Auf diese Weise können auch größere Tanks vollständig von der Meßeinrichtung erfaßt werden, die zu diesem Zwecke in dichtem Abstand zur Tankwandung durch den Tank fährt. Die Fahrt kann dabei entweder von einer Bedienperson ferngesteuert oder aber selbstgeregelt werden, indem das Tauchboot z.B. in einem endlosen Zickzackkurs nach und nach den gesamten Tank durchfährt.

Als Abtrennanlage für die Umlauffiltereinrichtung kommen beispielsweise Sieb-Filtereinrichtungen unterschiedlicher Bauart in Frage.

Besonders bevorzugt ist es jedoch, wenn die Abtrennanlage wenigstens einen Sedimentierfilterbehälter aufweist, in den von oben zu reinigendes Heizöl einführbar ist und in dem wenigstens ein Siebfilter zum Filtern von sich absetzenden schweren Bestandteilen des Heizöls angeordnet ist.

Ein derartiger Sedimentierfilterbehälter stellt einen Kompromiß zwischen reinen Filtereinrichtungen und reinen Sedimentationseinrichtungen dar. Reine Filtereinrichtungen ermöglichen zwar eine große Filtergeschwindigkeit, haben jedoch den Nachteil, daß sich das Filtermittel relativ rasch mit dem Filterkuchen zusetzt und deswegen in relativ kurzen Abständen rückgespült oder in sonstiger Weise gereinigt werden muß. Bei Sedimentieranlagen hingegen beruht die Abtrennung lediglich auf dem unterschiedlichen spezifischen Gewicht der einzelnen Bestandteile der Suspension, so daß an sich keine Filtermittel erforderlich sind. Der vorgeschlagene Kompromiß zwischen beiden Abtrennungsprinzipien ermöglicht einen relativ hohen Heizöldurchsatz durch die Abtrennanlage, ohne daß hierfür während des Betriebs der Umlauffiltereinrichtung eine Reinigung des Siebfilters erforderlich ist. Der sich absetzende Heizölschlamm kann vielmehr über ein Ventil aus dem Sedimentierfilterbehälter am unteren Ende abgelassen werden.

Bei einer bevorzugten Weiterbildung dieser Ausgestaltung umfaßt die Abtrennanlage mehrere miteinander verbundene Filterstufen, die ihrerseits jeweils einen oder mehrere miteinander verbundene Sedimentierfilterbehälter aufweisen.

Durch eine derartige mehrstufige Filterung kann die Effektivität der Abtrennung weiter erhöht werden. So kann in einer ersten Filterstufe eine Vorfilterung vorgesehen sein, in der nur die schwersten und gröbsten Rückstände zurückgehalten werden. Daran kann sich eine Grobfilterungsstufe und eine Feinfilterungsstufe anschließen, deren Siebfilter auf Maschendichten bis zu 25 *µ*m herunter reduziert werden können. Mit derart feinen Siebfiltern, die natürlich nur bei einer mehrstufigen Abtrennanlage möglich sind, lassen sich hervorragende Reinigungsergebnisse erzielen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Vorteile und Merkmale der Erfindung ergeben sich aus der nachfolgenden Beschreibung eines Ausführungsbeispiels anhand der Zeichnung. Darin zeigen:
- Fig. 1: eine stark schematisierte Übersichtsdarstellung eines erfindungsgemäßen Reinigungssystems, dessen Komponenten teilweise in einem Kraftfahrzeug angeordnet sind;
- Fig. 2: eine Prinzipdarstellung der in dem Kraftfahrzeug aus Fig. 1 angeordneten Komponenten des Reinigungssystems;
- Fig. 3: eine schematisierte, geschnittene Darstellung eines in Fig. 1 gezeigten Heizöltanks, in den Komponenten des erfindungsgemäßen Reinigungssystems eingeführt sind;
- Fig. 4: eine vereinfachte Darstellung einer Abtrennanlage für ein erfindungsgemäßes Reinigungssystem.

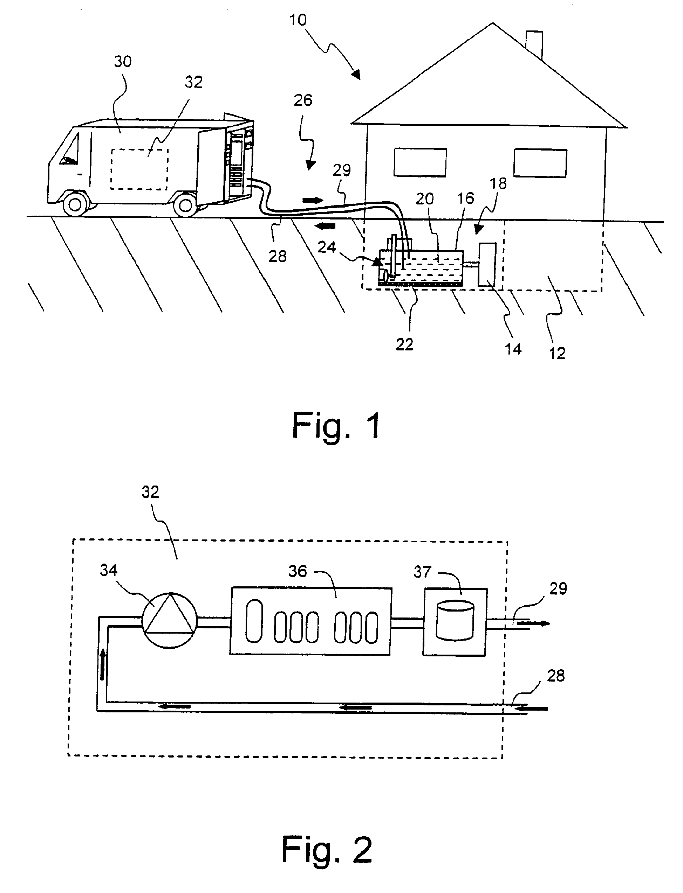

Fig. 1 zeigt ein Einfamilienhaus 10 mit Kellerräumen 12, in denen ein Brenner 14 und ein Tank 16 einer Ölheizungsanlage 18 aufgestellt sind. In dem Tank 16 befindet sich zu reinigendes Heizöl 20, in dem sich eine Schicht aus Heizölschlamm 22 an einem Boden des Tanks 16 abgesetzt hat.

Zur Reinigung des Heizöls 20 ist ein Reinigungssystem vorgesehen, das eine in den Tank 16 eingeführte Verwirbelungseinrichtung 24 zur Aufmischung des Heizöls 20 sowie eine Umlauffiltereinrichtung umfaßt, die insgesamt mit 26 bezeichnet ist. Die Umlauffiltereinrichtung 26 umfaßt eine in den Tank 16 eingeführte Ansaugleitung 28 sowie eine ebenfalls in den Tank 16 eingeführte Rückflußleitung 29, die das Innere des Tanks mit in einem Servicefahrzeug 30 angeordneten fahrzeugseitigen Komponenten 32 verbinden. Die in Fig. 2 schematisch dargestellten fahrzeugseitigen Komponenten 32 umfassen eine Umwälzpumpe 34, eine Abtrennanlage 36 zum Abtrennen von Heizölverunreinigungen aus dem angesaugten Heizöl 20 sowie optional einen Dekanter 37, mit dem eine Phasenabtrennung des in der Abtrennanlage 36 gereinigten Heizöls 20 stattfindet. Das gereinigte Heizöl 20 verläßt das Servicefahrzeug 30 über die Rückflußleitung 29 und gelangt schließlich wieder in den Tank 16 zurück.

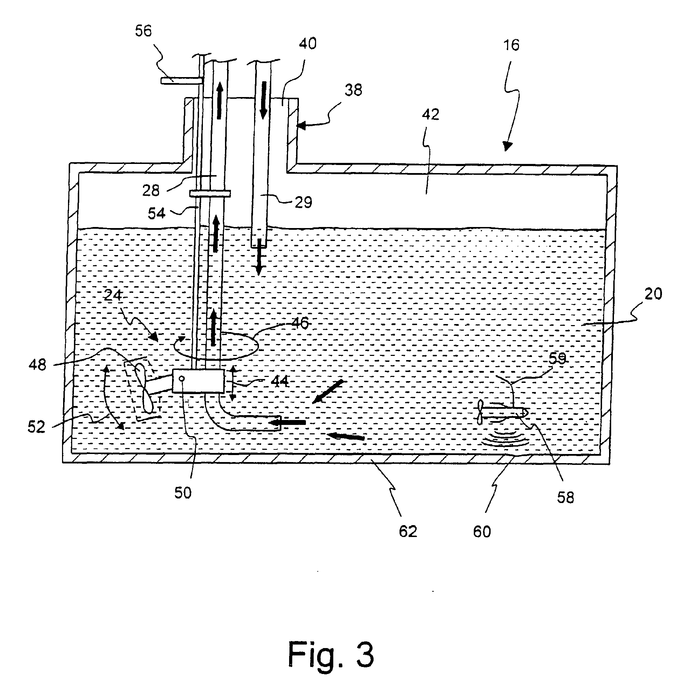

Fig. 3 zeigt den Tank 16 in einer vereinfachten geschnittenen Darstellung, zusammen mit den darin eingeführten Komponenten des neuen Reinigungssystems.

Der Tank 16 weist einen Dom 38 auf, an dessen Oberseite sich eine von einem in Fig. 3 nicht dargestellten Deckel verschließbare Tanköffnung 40 befindet. Durch diese Tanköffnung 40 sind die Ansaugleitung 28 sowie die Rückflußleitung 29 in einen Innenraum 42 des Tanks 16 eingeführt. Die in den Innenraum 42 eingeführten Abschnitte der Ansaugleitung 28 und der Rückflußleitung 29 sind vorzugsweise als feste Rohre ausgeführt, während die Verbindung zwischen diesen Abschnitten und dem Servicefahrzeug 30 durch flexible Schläuche gebildet wird.

An der Ansaugleitung 28 ist die Verwirbelungseinrichtung 24 in Richtung eines Pfeils 44 in der Höhe verschiebbar und um die Ansaugleitung 28 herum in Richtung eines Pfeils 46 verschwenkbar befestigt. Die Verwirbelungseinrichtung 24 ist als Rührgerät mit einem motorisch angetriebenen Propeller 48 ausgebildet. Der Propeller 48 ist zusätzlich noch um eine horizontale Achse 50 in Richtung eines Pfeils 52 verschwenkbar, so daß sich, zusammen mit den durch die Pfeile 44 und 46 angedeuteten Bewegungsmöglichkeiten, eine vielfältige Verstellbarkeit des Propellers 48 innerhalb des Innenraums 42 ergibt.

Der Propeller 48 wird hydromotorisch angetrieben, wobei eine hierzu erforderliche Hydraulikleitung 54 ebenfalls durch die Tanköffnung 40 aus dem Innenraum 42 herausgeführt ist. Die Hydraulikleitung 54 ist an ihrem tankseitigen Ende ebenfalls als festes Rohr ausgebildet und dient gleichzeitig als mechanisches Betätigungselement, mit dem der Propeller 48 im Innenraum 42 in der Höhe verschoben (Pfeil 44), um die Ansaugleitung 28 herumgeschwenkt (Pfeil 46) oder um die horizontale Achse 50 nach oben und unten geschwenkt (Pfeil 52) werden kann. Hierzu ist außerhalb des Tanks 16 ein Griff 56 an der Hydraulikleitung 54 befestigt, mit dem die genannten Bewegungen auf den Propeller 48 übertragen werden können. Die Hydraulikleitung 54 ist mit einem Hydraulikaggregat verbunden, welches entweder in unmittelbarer Nähe des Tanks 16, z.B. in einem der Kellerräume 12, oder aber in dem Servicefahrzeug 30 aufgestellt oder darin fest eingebaut ist.

Zur Durchführung der Reinigung des Heizöls 20 werden zunächst die Rückflußleitung 29 sowie die Ansaugleitung 28 mit der daran befestigten Verwirbelungseinrichtung 24 durch die Tanköffnung 40 in den Innenraum 42 des Tanks 16 eingeführt. Anschließend wird das Hydraulikaggregat über die Hydraulikleitung 54 mit dem Hydraulikmotor des Propellers 48 verbunden. Durch den Antrieb des Propellers 48 wird nun das Heizöl 20 nach und nach im Tank 16 aufgemischt, wobei insbesondere auch der Heizölschlamm 22 am Boden des Tanks 16 aufgewirbelt und nach und nach mit den übrigen Bestandteilen des Heizöls 20 weitgehend homogen vermengt wird. Um die gleichmäßige Aufmischung zu verbessern, kann, je nach Form des Tanks 16, der Propeller 48 im Innenraum 42 des Tanks 16 in verschiedene Richtungen bewegt und geschwenkt werden, um die Aufmischung des Heizöls 20 zu beschleunigen. Fig. 3 zeigt das Heizöl 20 in diesem weitgehend homogen aufgemischten Zustand.

Nun wird die Umwälzpumpe 34 im Servicefahrzeug 30 angeschaltet, so daß aufgemischtes Heizöl 20 aus dem Innenraum 42 über die Ansaugleitung 28 in das Servicefahrzeug 30 und dort in die Abtrennanlage 36 gesaugt wird. In der Abtrennanlage 36 werden, wie dies weiter unten noch näher erläutert wird, die Schweb- und Trübstoffe, die zur Ausbildung des Heizölschlamms 22 führen, abgetrennt und das Heizöl 20 dadurch gereinigt. Der optionale Dekanter 37 bildet eine zweite Reinigungsstufe, in der weitere Schweb- und Trübstoffe und gegebenenfalls eine Wasserphase aus dem Heizöl 20 entfernt werden. Von dort gelangt das gereinigte Heizöl über die Rückflußleitung 29 zurück in den Tank 16.

Diese Reinigung im Umlaufverfahren wird so lange durchgeführt, bis in der Abtrennanlage 36 und gegebenenfalls dem Dekanter 37 keine nennenswerten Rückstände mehr abgetrennt werden können. Die in den Innenraum 42 eingeführten Komponenten des Reinigungssystems können nun wieder über die Tanköffnung 40 aus dem Tank 16 herausgenommen werden.

Falls anschließend noch eine Überprüfung des Tanks 16 von der Innenseite her gewünscht ist, wie dies beispielsweise häufig bei als Stahlbehältern ausgeführten Tanks der Fall ist, so wird eine als Tauchboot 58 ausgeführte Meßeinrichtung in den Innenraum 42 eingebracht, die mit einer Sensorik zur Messung der Wandstärke des Tanks 16 sowie gegebenenfalls mit einem Ultraschallsensor zur Detektion von feinen Haarrissen ausgestattet ist. Das Tauchboot 58 kann entweder von außen von einer Bedienperson ferngesteuert werden oder aber mit einer selbststeuernden Regeleinheit ausgestattet sein, die das Tauchboot 58 z.B. in einem endlosen Zickzackkurs durch den Innenraum 42 des Tanks tauchen läßt. Auf diese Weise wird nach einiger Zeit automatisch der gesamte Tank 16 innenseitig von dem Tauchboot 58 überstrichen, so daß eine Schwachstelle 60 in einer Wandung 62 des Tanks 16 zuverlässig erkannt wird. Im einfachsten Fall ist die Meßeinrichtung als fahrbarer Molch ausgebildet, der den - am meisten korrosionsgefährdeten - Boden des Tanks 16 abfährt.

Falls eine Schwachstelle 60 erkannt wird, die eine innenseitige Reparatur des Tanks 16 erfordert, so wird es in der Regel erforderlich sein, den gesamten Tankinhalt abzupumpen, damit entsprechendes Fachpersonal in den Tank 16 einsteigen und die Reparatur oder eine Auskleidung vornehmen kann.

Das Tauchboot 58 ist vorzugsweise mit einem eigenen Antrieb und einer Rudersteuerung versehen und verfügt über eine Antenne 59, über die Daten an einen Empfänger außerhalb des Tanks 16, z.B. in dem Servicefahrzeug 30, übertragen werden können.

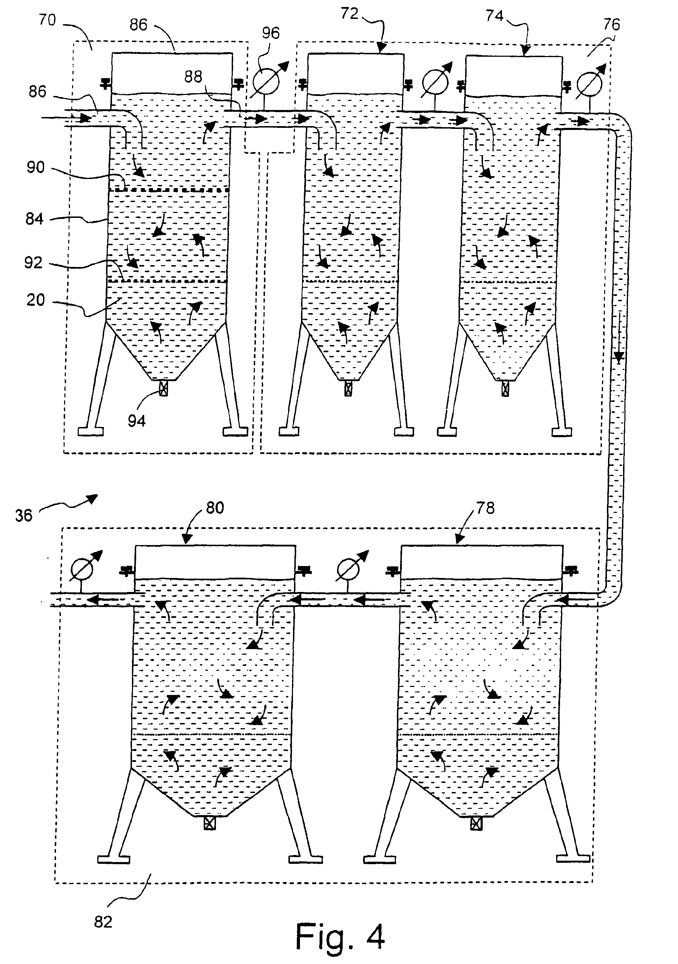

Fig. 4 zeigt eine mögliche Realisierung für die in Fig. 2 dargestellte Abtrennanlage 36. Die Abtrennanlage 36 ist dreistufig aufgebaut und umfaßt ein Vorfilter 70, eine aus zwei Grobfiltern 72 und 74 bestehende Grobfilterstufe 76 sowie eine aus zwei Feinfiltern 78 und 80 bestehende Feinfilterstufe 82. Jedes der Filter 70, 72, 74, 78 und 80 ist als Sedimentierfilterbehälter ausgeführt, wie er im folgenden am Beispiel des Vorfilters 70 näher erläutert wird. Das Vorfilter 70 weist einen Behälter 84 mit einem verschließbaren Deckel 86 auf. An einem oberen Abschnitt des Behälters 84 befindet sich ein Einlaßstutzen 86, über den während des Betriebs zu reinigendes Heizöl 20 eingeführt wird, sowie ein Auslaßstutzen 88, über den vorgereinigtes Heizöl 20 wieder aus dem Behälter 84 abfließen kann.

In dem Behälter 84 ist ein erstes Siebfilter 90 sowie weiter unten ein zweites Siebfilter 92 angeordnet, wobei das zweite Siebfilter 92 eine kleinere Maschendichte als das erste Siebfilter 90 hat. Beim Betrieb der Abtrennanlage 36 sinken schwerere Bestandteile in dem zu reinigenden Heizöl 20 nach unten ab, wobei größere Partikel und Verklumpungen des Heizöls 20 an der Unterseite der beiden Siebfilter 90 und 92 zurückgehalten werden. Die Siebfilter 90, 92 haben eine solche Maschenweite, daß die in dem aufgerührten Heizöl 20 enthaltenen Partikel und Verklumpungen schwerkraftunterstützt hindurchgehen, jedoch nicht wieder nach oben gelangen.

Am unteren Ende des Behälters 84 setzen sich somit nach und nach die schwereren, aus dem Heizöl 20 zu entfernenden Bestandteile ab und können kontinuierlich oder in vorgegebenen zeitlichen Abständen über ein Ventil 94 aus dem Behälter 84 abgelassen und über in Fig. 4 nicht dargestellte Leitungen oder Auffangrinnen zur Entsorgung abgeführt werden. Hierzu enthält das Fahrzeug 30 einen nicht dargestellten kleinen Tank. Die leichteren Bestandteile des Heizöls 20 verbleiben im oberen Bereich des Behälters 84 und verlassen diesen über den Auslaßstutzen 88.

Die Filter der Grobfilterstufe 76 und der Feinfilterstufe 82 sind entsprechend aufgebaut, können sich jedoch selbstverständlich hinsichtlich ihrer Abmessungen und insbesondere bezüglich ihrer Siebfilter voneinander unterscheiden. Vorzugsweise wird die Maschenweite der Siebfilter in den einzelnen Behältern zunehmend kleiner, bis schließlich in der Feinfilterstufe Maschendichten bis hinab zu 50 µm erreicht werden.

Zwischen den einzelnen Behältern 84 sind Manometer 96 angeordnet, die eine Überwachung der Druckverhältnisse in der gesamten Abtrennanlage 36 erlauben. Auf diese Weise lassen sich insbesondere Rückschlüsse über mögliche Verstopfungen der Siebfilter gewinnen und der Zu- und Ablauf regeln.

## Patentansprüche

1. Reinigungssystem zur Reinigung von Heizöl (20), das in einem Tank (16), insbesondere einem Tank eines Heizölendverbrauchers, gelagert ist, mit einer Verwirbelungseinrichtung (24) zur Aufmischung des Heizöls (20), wobei die Verwirbelungseinrichtung als Rührgerät (24) mit einem motorisch angetriebenen Propeller (48) ausgebildet ist, und einer Umlauffiltereinrichtung (26), die eine in den Tank (16) einführbare Ansaugleitung (28), eine Umwälzpumpe (34), eine Abtrennanlage (36) zum Abtrennen von Heizölverunreinigungen und eine in den Tank (16) einführbare Rückflußleitung (29) aufweist, wobei die Verwirbelungseinrichtung (24), die Ansaugleitung (28) und die Rückflußleitung (29) in den Tank (16) einführbar sind und nach einer Reinigung aus dem Tank (16) herausnehmbar sind, **dadurch gekennzeichnet, daß** der Propeller (48) in allen drei Raumrichtungen (44, 46, 52) bewegbar an dem Rührgerät (24) angeordnet ist.

2. Reinigungssystem nach Anspruch 1, **dadurch gekennzeichnet, daß** der Propeller (48) hydromotorisch angetrieben ist.

3. Reinigungssystem nach Anspruch 1 oder 2, **dadurch gekennzeichnet, daß** der Propeller (48) um eine Propellerquerachse (50) verschwenkbar (52) ist.

4. Reinigungssystem nach einem der vorhergehenden Ansprüche, **dadurch gekennzeichnet, daß** die Umlauffiltereinrichtung (26) einen Dekanter (37) aufweist.

5. Reinigungssystem nach einem der vorhergehenden Ansprüche, **dadurch gekennzeichnet, daß** die Umwälzpumpe (34), die Abtrennanlage (36) und der Dekanter (37) in einer fahrbaren Einheit (30) angeordnet sind.

6. Reinigungssystem nach einem der vorhergehenden Ansprüche, **dadurch gekennzeichnet, daß** das Reinigungssystem eine in den Tank (16) einführbare Meßeinrichtung (58) zur Messung der Wandstärke des Tanks (16) umfaßt.

7. Reinigungssystem nach Anspruch 6, **dadurch gekennzeichnet, daß** die Meßeinrichtung als fernsteuerbares oder selbstregelndes Tauchboot ausgebildet ist.

8. Reinigungssystem nach einem der vorhergehenden Ansprüche, **dadurch gekennzeichnet, daß** die Abtrennanlage (36) wenigstens einen Sedimentierfilterbehälter (70, 72, 74, 78, 80) aufweist, in den von oben zu reinigendes Heizöl (20) einführbar ist und in dem wenigstens ein Siebfilter (90, 92) zum Filtern von sich absetzenden schwereren Bestandteilen des Heizöls angeordnet ist.

9. Reinigungssystem nach Anspruch 8, **dadurch gekennzeichnet, daß** die Abtrennanlage (36) mehrere miteinander verbundene Filterstufen (70, 76, 82) umfaßt, die ihrerseits jeweils einen oder mehrere miteinander verbundene Sedimentierfilterbehälter (70; 72, 74; 78, 80) aufweisen.

10. Verfahren zur Reinigung von Heizöl (20), das in einem Tank (16), insbesondere einem Tank eines Heizölendverbrauchers, gelagert ist, mit folgenden Schritten:
a) Aufmischen des Heizöls (20) mit einer in den Tank (16) eingeführten Verwirbelungseinrichtung (24), die als Rührgerät (24) mit einem motorisch angetriebenen Propeller (48) ausgebildet ist;
b) Ansaugen von Heizöl (20), Reinigen des angesaugten Heizöls (20) und Zurückführen des gereinigten Heizöls in den Tank (16) mit Hilfe einer Umlauffiltereinrichtung (26),
**dadurch gekennzeichnet, daß** der Propeller (48) in dem Tank (16) während der Reinigung in allen drei Raumrichtungen bewegt wird.

11. Verfahren nach Anspruch 10, **dadurch gekennzeichnet, daß** die Reinigung des Heizöls (20) durch Abtrennen von schwereren Bestandteilen des Heizöls in einer Abtrennanlage erfolgt.

12. Verfahren nach Anspruch 11, **dadurch gekennzeichnet, daß** das in der Abtrennanlage (36) gereinigte Heizöl in einem Dekanter (37) zusätzlich gereinigt wird.

13. Verfahren nach einem der Ansprüche 10 bis 12, **dadurch gekennzeichnet, daß** die Wandstärke des Tanks (16) durch eine in den Tank (16) eingeführte Meßeinrichtung (58) gemessen wird.

## Claims

1. Cleaning system for cleaning fuel (20) stored within a tank (16), particularly in a tank of an end user of fuel, comprising vortexing means (24) for mixing up the fuel (20), wherein the vortexing means is formed as stirring device (24) having a motor-driven propeller (48), and band filter means (26) including a suction line (28) insertable into the tank (16), circulation pump (34), separation system (36) for separating fuel contaminations, and a backflow line (29) insertable into the tank (16), wherein the vortexing means (24), the suction line (28) and the backflow line (29) are insertable into the tank (16) and removable from the tank (16) after cleaning, **characterized in that** the propeller (48) is mounted to the stirring device (24) movably in all the three spatial directions (44, 46, 52).

2. Cleaning system of claim 1, **characterized in that** the propeller (48) is driven hydraulic-motorly.

3. Cleaning system of claims 1 or 2, **characterized in that** the propeller (48) can be hinged around a transverse axis (50) of the propeller.

4. Cleaning system of any of the proceeding claims, **characterized in that** the band filter means (26) have a decanter (37).

5. Cleaning system of any of the proceeding claims, **characterized in that** the circulation pump (34), the separation system (36) and the decanter (37) are arranged in a mobile unit (30).

6. Cleaning system of any of the proceeding claims, **characterized in that** the cleaning system includes measuring means (58) insertable into the tank (16) for measuring the thickness of a wall of the tank (16).

7. Cleaning system of claim 6, **characterized in that** the measuring means are formed as a remotably controllable or self-regulating submersible boat.

8. Cleaning system of any of the proceeding claims, **characterized in that** the separation system (36) has at least one sedimentation filter compartment (70, 72, 74, 78, 80) into which fuel (20) to be cleaned is insertable from above and within which at least one gauze filter (90, 92) for filtering heavier deposited components of the fuel is arranged.

9. Cleaning system of claim 8, **characterized in that** the separation system (36) includes several filter stages (70, 76, 82) connected to each other, each comprising one or more sedimentation filter compartments (70; 72, 74; 78, 80) connected to each other.

10. Method for cleaning fuel (20), which is stored within a tank (16), particularly in a tank of an end user of fuel, comprising the following steps:
a) mixing up the fuel (20) by vortexing means (24) inserted into the tank (16) being formed as stirring device (24) having a motor-driven propeller (48);
b) sucking the fuel (20), cleaning the sucked fuel (20) and returning the cleaned fuel into the tank (16) by means of band filter means (26),
**characterized in that** the propeller (48) is moved within the tank (16) during the cleaning in all the three spatial directions.

11. Method of claim 10, **characterized in that** the cleaning of the fuel (20) is performed by separating heavier components of the fuel in a separation system.

12. Method of claim 11, **characterized in that** the fuel cleaned within the separation system (36) is additionally cleaned in a decanter (37).

13. Method of any of claims 10 to 12, **characterized in that** the wall thickness of the tank (16) is measured by measuring means (58) inserted into the tank (16).

## Revendications

1. Système d'épuration pour l'épuration du fioul (20), qui est stocké dans une cuve (16), en particulier une cuve d'un consommateur de fioul, comportant un dispositif de tourbillonnement (24) pour brasser le fioul (20), le dispositif de tourbillonnement étant réalisé sous la forme d'un mélangeur-agitateur (24) muni d'une hélice (48) actionnée par un moteur, et un dispositif de filtrage cyclique (26), qui comporte une conduite d'aspiration (28) à introduire dans la cuve (16), une pompe de recirculation (34), une installation de filtrage (36) destinée à filtrer les impuretés contenues dans le fioul, et une conduite de retour (29) à introduire dans la cuve (16), le dispositif de tourbillonnement (24) la conduite d'aspiration (28) et la conduite de retour (29) pouvant être introduits et retirés hors de la cuve (16) à la fin d'un processus d'épuration, **caractérisé en ce que** l'hélice (48) est montée sur le mélangeur-agitateur (24) de manière à pouvoir se déplacer dans les trois directions dans l'espace (44, 46, 52).

2. Système d'épuration selon la revendication 1, **caractérisé en ce que** l'hélice (48) est actionnée par un moteur hydraulique.

3. Système d'épuration selon la revendication 1 ou 2, **caractérisé en ce que** l'hélice (48) est apte à pivoter (52) autour d'un axe transversal (50) de l'hélice.

4. Système d'épuration selon l'une quelconque des revendications précédentes, **caractérisé en ce que** le dispositif de filtrage cyclique (26) comporte un décanteur (37).

5. Système d'épuration selon l'une quelconque des revendications précédentes, **caractérisé en ce que** la pompe de recirculation (34), l'installation de filtrage (36) et le décanteur (37) sont montés dans une unité mobile (30).

6. Système d'épuration selon l'une quelconque des revendications précédentes, **caractérisé en ce que** le système d'épuration comporte un dispositif de mesure (58) pouvant être introduit dans la cuve (16) pour mesurer l'épaisseur de paroi Ce la cuve (16).

7. Système d'épuration selon la revendication 6, **caractérisé en ce que** le dispositif de mesure est un dispositif submersible pouvant être télécommandé ou auto-réglé.

8. Système d'épuration selon l'une quelconque des revendications précédentes, **caractérisé en ce que** l'installation de filtrage (36) comporte au moins un réservoir de filtrage des sédiments (70, 72, 74, 78, 80), dans lequel le fioul (20) à épurer peut être introduit par le haut et dans lequel est agencé au moins un tamis de filtrage (90, 92) pour filtrer les composants lourds du fioul qui se déposent.

9. Système d'épuration selon la revendication 8, **caractérisé en ce que** l'installation de filtrage (36) comporte plusieurs niveaux de filtrage (70, 76, 82) reliés les uns aux autres, qui comportent pour leur part chacun un ou plusieurs réservoirs de filtrage des sédiments (70, 72, 74, 78, 80) reliés entre eux.

10. Procédé pour l'épuration du fioul (20) stocké dans une cuve (16), en particulier une cuve d'un consommateur de fioul, comportant les étapes suivantes :
a) brassage du fioul (20) avec un dispositif de tourbillonnement (24), qui est introduit dans la cuve (16) et qui est réalisé sous forme de mélangeur-agitateur (24) muni d'une hélice (48) actionnée par un moteur ;
b) aspiration du fioul (20), épuration du fioul (20) aspiré et retour du fioul épuré dans la cuve (16) au moyen d'un dispositif de filtrage cyclique (26),
**caractérisé en ce que**, pendant le processus d'épuration, l'hélice (48) se déplace dans la cuve (16) dans les trois directions dans l'espace.

11. Procédé selon la revendication 10, **caractérisé en ce que** l'épuration du fioul (20) est effectuée par filtrage des composants lourds du fioul dans une installation de filtrage.

12. Procédé selon la revendication 11, **caractérisé en ce que** le fioul, épuré dans l'installation de filtrage (36), est épuré en plus dans un décanteur (37).

13. Procédé selon l'une quelconque des revendications 10 à 12, **caractérisé en ce que** l'épaisseur de paroi de la cuve (16) est mesurée par un dispositif de mesure (58) introduit dans la cuve (16).
